# FASCICULE DE BREVET EUROPEEN

(11) **EP 0 915 132 B1**
(45) Date de publication et mention de la délivrance du brevet: **28.05.2003**
(21) Numéro de dépôt: 98121269.9
(22) Date de dépôt: 09.11.1998
(51) Int. Cl.: C08K 5/54, C08L 7/00, C08L 19/00

(54) **Composition de caoutchouc destinée à la fabrication d'articles à base d'élastomère comportant des fonctions oxygénées et de charge de type silice**
Für Laufflächen geeignete Gummimischung auf Basis von Elastomeren mit Sauerstoff enthaltenden Gruppen und von silicaartigen Füllstoffen
Rubber compositions for treads based on elastomers having oxygen containing group and on a silica-type filler

(30) Priorité: 10.11.1997 FR 9714211
(43) Date de publication de la demande: 12.05.1999
(73) Titulaire: COMPAGNIE GENERALE DES ETABLISSEMENTS MICHELIN-MICHELIN & CIE, 63040 Clermont-Ferrand Cédex (FR)
(72) Inventeur: Vanel, Robert, 63000 Clermont-Ferrand (FR)
(74) Mandataire: Hiebel, Robert

(56) Documents cités:
- EP-A- 0 795 577
- EP-A- 0 799 854
- BANDYOPADHYAY S ET AL: "INTERACTION BETWEEN CARBOXYLATED NITRILE RUBBER AND PRECIPITATED SILICA: ROLE OF (3-AMINOPROPYL)TRIETHYOXYSILANE" RUBBER CHEMISTRY AND TECHNOLOGY, vol. 69, no. 4, septembre 1996, pages 637-647, XP000643469
- CHEMICAL ABSTRACTS, vol. 118, no. 10, 8 mars 1993 Columbus, Ohio, US; abstract no. 82602, JIANG B ET AL: "Studies on interface states between natural rubber/butadiene rubber blend and silica" XP002066852 & XIANGJIAO GONGYE, vol. 39, no. 3, - 1992 pages 165-169, CHINA

## Description

La présente invention concerne les compositions de caoutchouc, en particulier les compositions de caoutchouc destinées à la fabrication d'enveloppes de pneumatiques et d'articulations élastiques de liaison au sol de véhicules, ces compositions étant notamment utilisées dans la bande de roulement d'enveloppes de pneumatiques pour véhicules poids lourd, génie civil, agricole ou pour avion.

Les compositions pour bande de roulement des enveloppes de pneumatiques sont en général obtenues en incorporant une charge renforçante comme du noir de carbone dans un ou plusieurs élastomères. Dans le cas des enveloppes de pneumatiques qui doivent supporter de lourdes charges ou qui doivent rouler à grande vitesse, le dégagement de chaleur est élevé et l'enveloppe subit en conséquence des températures élevées. Cette élévation de température s'accompagne d'une résistance au roulement et d'une consommation de carburant élevées et elle peut être à l'origine d'avaries dans le pneumatique. Il est donc souhaitable d'obtenir des mélanges qui génèrent moins de chaleur dans ces conditions de roulage difficiles de façon à éviter un vieillissement prématuré de la carcasse qui doit pouvoir être rechapée après usure de la bande de roulement. L'obtention de tels mélanges faiblement hystérétiques ne doit cependant pas être accompagnée de déchéance en usure et traction.

En remplaçant partiellement ou totalement le noir de carbone par de la silice dans une composition à base de caoutchouc naturel, il est connu de l'homme de l'art que l'on peut obtenir des mélanges moins hystérétiques que ceux renforcés avec du noir de carbone et que l'emploi d'un agent de couplage entre la silice et l'élastomère permet de limiter les interactions entre les particules de silice qui sont source de perte hystérétique (c'est-à-dire d'hystérèse) et d'améliorer le renforcement en particulier la résistance à l'usure comme décrit dans EP-A-0.501.227.

Comme agents de couplage silice-élastomère de mélanges vulcanisables au soufre connus de l'homme de l'art, on peut citer des alcoxysilanes réactifs par une extrémité avec la silice (partie silane) et par l'autre extrémité avec les doubles liaisons carbone-carbone de l'élastomère diénique, par exemple au moyen d'un groupement polysulfure ou mercapto. De tels agents de couplage peuvent être prémélangés avec la silice et éventuellement greffés sur la silice ou ajoutés pendant la confection du mélange, l'agent de couplage se combinant in situ avec la silice. Parmi les agents de couplage de ce type les plus utilisés on peut citer le Si69 qui est le tétrasulfure de bis-(3-triéthoxysilylpropyle) commercialisé par Degussa (Rubber Chem. technol., 1977, Vol 50, p.447) ou le X50S, également commercialisé par Degussa, qui est un mélange 50/50 en poids de Si69 et de noir N330.

Il est également connu de l'homme de l'art que des silanes ayant un groupement aminoalkyle sont cités au même titre que des silanes ayant des groupements méthyles ou vinyles comme n'étant pas des agents de couplage actifs avec les élastomères diéniques (Wagner, Rubber Chem. and Technol., 1976, p. 703 à 794) car il n'y a pas de réaction prévisible entre le groupement aminé et les doubles liaisons de l'élastomère. Cependant, dans certains brevets de compositions à base (i) d'élastomères diéniques, (ii) de silice et (iii) d'agent de couplage, on peut trouver cités, au même titre que les groupements soufrés, mercapto ou polysulfures actifs avec les élastomères possédant des doubles liaisons, les groupements vinyle, amino et époxy, comme par exemple dans EP 0738613 A1 ou US-A-5 225 011 dans lequel les amino ou époxy alcoxysilanes sont décrits comme agents de couplage, pour des compositions à base de caoutchouc naturel possédant à titre de charge un coupage de noir de carbone et de silice, au même titre qu'un mercaptoalcoxysilane ou un polysulfure de bis-alcoxysilane tel que le Si69, mais ne sont évidemment pas utilisés dans les exemples fournis. En effet, il est connu de l'homme de l'art qu'un groupement vinyle ou amino ou époxy ne peut être réactif avec les doubles liaisons d'un élastomère diénique.

Toutefois, si l'on utilise un aminoalkyltrialcoxysilane, même à des taux très faibles dans une composition à base de caoutchouc naturel majoritaire et d'une charge de type silice majoritaire, la composition ne peut être utilisée car le mélange grillant (temps de retard à la vulcanisation quasi nul) commence à réticuler au cours des étapes de mélangeage et de mise en forme ; la mise en oeuvre de ce mélange qui est devenu très dur, notamment son extrudabilité, est rendue quasiment impossible à l'échelle industrielle.

On connaît d'autre part l'utilisation d'alkylacoxysilanes comme par exemple les hexadécyltriméthoxy et triéthoxy silanes, respectivement Si116 et Si216 commercialisés par DEGUSSA, dépourvus de groupements réactifs avec les élastomères insaturés, mais réactifs par leurs groupements alcoxy avec les charges de type silice c'est-à-dire possédant en surface des groupements Si-OH, qui permettent de réduire la viscosité, d'améliorer la mise en oeuvre et d'activer la vulcanisation de compositions comportant un ou des silanes polysulfures comme le Si69 (Technical Information, DEGUSSA AG n° 6000.1 de JUIN 1994). En conséquence, une association alkyltrialcoxysilane-aminoalkyltrialcoxysilane n'est en conséquence pas envisagée par l'homme de l'art pour augmenter le temps de retard quasiment nul dû à l'utilisation d'aminoalkyltrialcoxysilane.

La présente invention a pour but d'obtenir une composition de caoutchouc renforcée au moins partiellement avec de la silice, qui puisse être mis en oeuvre à l'échelle industrielle sans difficulté particulière et qui présente une hystérèse inférieure à celle des compositions connues comportant les agents de couplages les plus utilisés, comme le Si69 et le X50S, tout en procurant, dans le cas d'une application dans une enveloppe de pneumatique notamment dans une bande de roulement, une résistance à l'usure et des caractéristiques de traction pratiquement aussi bonnes, ou même meilleures, que celles des compositions connues renforcées avec de la silice ou du noir de carbone, une diminution de l'hystérèse et en conséquence une économie de carburant et une durée de vie de la carcasse prolongée car la température interne du pneumatique au cours du roulage reste relativement faible.

La demanderesse a trouvé, de façon surprenante, que ce but était atteint en utilisant dans la composition de caoutchouc à la fois un aminoalkylalcoxysilane et un alkylalcoxysilane dépourvu de groupement susceptible de réagir avec l'élastomère.

La composition de caoutchouc conforme à l'invention est caractérisée en ce qu'elle comporte :
a) au moins un élastomère diénique ayant des fonctions oxygénées ;
b) une charge constituée au moins en partie d'au moins une matière, dite "de type silice", choisie dans le groupe formé par les silices et les matières autres que les silices possédant en surface des fonctions oxygénées du silicium ;
c) au moins un agent de couplage choisi dans le groupe formé par les aminoalkylalcoxysilanes, les aminoarylalcoxysilanes et les aminoaralkylalcoxysilanes, les groupes alkyle, aryle ou aralkyle pouvant être le cas échéant substitués par des groupements fonctionnels ;
d) au moins un agent de recouvrement choisi dans le groupe formé par les alkylalcoxysilanes, les arylalcoxysilanes et les aralkylalcoxysilanes, les groupes alkyle, aryle ou aralkyle pouvant être le cas échéant substitués par des groupements fonctionnels à l'exception des groupements aminés ou soufrés.

L'invention concerne également les articles qui comportent la composition conforme à l'invention, ces articles étant par exemple des articles semi-finis, notamment des bandes de roulement pour enveloppes de pneumatiques, ou des produits finis, notamment des articulations élastiques de liaison au sol de véhicules telles que des attaches d'amortisseurs, des attaches de berceaux ou de traverses, des articulations de suspension et des enveloppes de pneumatiques.

Les fonctions oxygénées de l'élastomère peuvent être notamment les fonctions carbonyle (aldéhyde, cétone), carboxyle (acide) ou époxy.

L'élastomère à fonctions oxygénées peut être un élastomère diénique synthétique, les fonctions oxygénées étant introduites dans le polymère lors de la synthèse de celui-ci ou par un traitement ultérieur effectué sur le polymère pour introduire ces fonctions.

Comme exemples de tels élastomères diéniques synthétiques à fonctions oxygénées on peut citer les polyisoprènes, les polybutadiènes, les copolymères butadiène-isoprène (BIR), les copolymères butadiène-styrène (SBR), ou les terpolymères butadiène-isoprène-styrène (SBIR) qui sont modifiés :
- soit au cours de la synthèse par incorporation, dans un procédé en émulsion, d'un monomère, comme par exemple un acrylate ou méthacrylate d'alkyle transformé par acidification ultérieure en un groupement carboxyle ou bien un acrylate ou méthacrylate de glycidyle qui fournit un polymère avec des fonctions époxy le long de la chaîne,
- soit en bout de chaîne à la fin de la synthèse en solution organique, avec par exemple un catalyseur organolithien, par utilisation d'un composé comme un dialkylformamide qui greffe une fonction aldéhyde en bout de chaîne,
- soit sur la chaîne à la fin de la synthèse par un traitement ultérieur au moyen de réactifs comme par exemple des azocarboxylates ou des azidures substitués avec une fonction cétone ou acide.

L'élastomère diénique à fonctions oxygénées est de préférence le caoutchouc naturel. En effet il est connu que celui-ci comporte le plus fréquemment de telles fonctions par suite d'une oxydation qui se produit par exemple lors des opérations thermo-mécaniques effectuées au cours de la préparation des compositions élastomériques.

La composition peut comporter un ou plusieurs de ces élastomères diéniques à fonctions oxygénées, par exemple elle peut comporter un coupage de caoutchouc naturel et d'un ou plusieurs élastomères diéniques synthétiques à fonctions oxygénées.

La composition peut ne comporter que le ou les élastomères diéniques à fonctions oxygénées, ou elle peut comporter, en plus du ou des élastomères à fonctions oxygénées, un ou plusieurs autres élastomères diéniques dépourvus de fonctions oxygénées, ces élastomères, en particulier tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinylaromatique ayant de 8 à 20 atomes de carbone et éventuellement un composé acrylonitrile.

A titre de diènes conjugués, conviennent notamment le butadiène-1,3, le méthyl-2 butadiène-1,3, les 2,3-di(alcoyle en C1 à C5) butadiène-1,3 tels que par exemple le diméthyl-2,3 butadiène -1,3, diéthyl-2,3 butadiène-1,3, méthyl-2 éthyl-3 butadiène-1,3, le méthyl-2 isopropyl-3 butadiène-1,3, le phényl butadiène-1,3, le pentadiène-1,3, l'hexadiène-2,4, etc...

A titre de composés vinylaromatiques conviennent notamment le styrène, l'ortho, méta, para-méthylstyrène, le mélange commercial "vinyle-toluène", le para-tertiobutyl styrène, les méthoxystyrènes, les chlorostyrènes, le vinylmésitylène, le divinyl benzène, le vinylnaphtalène, etc....

Les copolymères peuvent contenir par exemple entre 99% et 20% en poids d'unités diéniques et de 1% à 80 % en poids d'unités vinyle aromatiques.

Les polymères pourvus ou dépourvus de fonctions oxygénées peuvent avoir toute microstructure qui est fonction des conditions de polymérisation utilisées, notamment de la présence ou non d'un agent modifiant et/ou randomisant et des quantités d'agent modifiant ou randomisant employées. Les polymères peuvent être à blocs, statistiques, séquencés, microséquencés, etc... et préparés en dispersion ou en solution.

A titre préférentiel d'élastomères diéniques synthétiques dépourvus de fonctions oxygénées, conviennent les polybutadiènes et en particulier ceux ayant une teneur en unités -1,2 comprise entre 4 % et 80% et ceux ayant plus de 90% de liaisons cis-1,4, les polyisoprènes, les copolymères de butadiène-styrène et en particulier ceux ayant une teneur en styrène comprise entre 5% et 50% en poids et plus particulièrement entre 20% et 40% en poids, une teneur en liaisons -1,2 de la partie butadiénique comprise entre 4% et 65%, une teneur en liaisons trans-1,4 comprise entre 30% et 80%, ceux ayant une teneur globale en composé aromatique comprise entre 5% et 50% et une température de transition vitreuse (Tg) comprise entre 0°C et -80°C et particulièrement ceux ayant une teneur en styrène comprise entre 25% et 30% en poids, une teneur en liaisons vinyliques de la partie butadiénique comprise entre 55% et 65%, une teneur en liaisons trans-1,4 comprise entre 20% et 25% et une température de transition vitreuse comprise entre -20°C et -30°C.

Dans le cas de copolymères de butadiène-styrène-isoprène conviennent ceux ayant une teneur en styrène comprise entre 5% et 50% et plus particulièrement comprise entre 10% et 40%, une teneur en isoprène comprise entre 15% et 60% en poids et plus particulièrement comprise entre 20% et 50% en poids, une teneur en butadiène comprise entre 5% et 50% et plus particulièrement comprise entre 20% et 40% en poids, une teneur en unités -1,2 de la partie butadiénique comprise entre 4% et 85%, une teneur en unités trans-1,4 de la partie butadiénique comprise entre 6% et 80%, une teneur en unités -1,2 plus -3,4 de la partie isoprénique comprise entre 5% et 70% et une teneur en unités trans-1,4 de la partie isoprénique comprise entre 10% et 50%.

Les polymères dépourvus de fonctions oxygénées peuvent être couplés et/ou étoilés ou encore fonctionnalisés avec un agent de couplage et/ou d'étoilage ou de fonctionnalisation.

De préférence, la portion élastomérique de la composition conforme à l'invention est constituée d'au moins 50 % en poids du ou des élastomères à fonctions oxygénées, c'est-à-dire que le rapport en poids du ou des élastomères à fonctions oxygénées et du ou des élastomères dépourvus de fonctions oxygénées est supérieur à 1. Avantageusement, la portion élastomérique de la composition conforme à l'invention est constituée d'au moins 50 % en poids de caoutchouc naturel.

Dans la composition conforme à l'invention, la matière de type silice de la charge peut être une matière autre qu'une silice possédant en surface des fonctions oxygénées du silicium, comme par exemple un noir de carbone CSDP (Carbon-Silica Dual Phase filler) ayant en surface une phase carbonée et une phase constituée de domaines où se trouve de la silice finement divisée. Une telle matière est par exemple décrite dans la conférence N° 24 du Meeting ACS, Rubber Division, Anaheim, Californie, 6-9 mai 1997).

Comme autres exemples de matières autres que les silices possédant en surface des fonctions oxygénées du silicium, on peut citer les aluminosilicates naturels comme la sépiolite ou les aluminosilicates synthétiques précipités à partir d'une solution contenant un aluminosilicate ou un mélange d'aluminate et de silicate.

La matière de type silice de la charge est avantageusement une silice, et plus préférentiellement une silice précipitée. Comme silice précipitée, on peut citer d'une part, les silices commerciales dont la surface spécifique BET est comprise entre 100 et 300 m2/g et plus particulièrement entre 120 et 250m2/g. Comme exemples non limitatifs de silices on peut citer les silices de Degussa Ultrasil VN3, de Rhône-Poulenc Zeosil 175MP ou de Akzo KS404, d'autre part, les silices hautement dispersibles.

L'effet bénéfique sera maximal dans la composition conforme à l'invention avec une silice hautement dispersible, c'est à dire toute silice ayant une aptitude à la désagglomération et à la dispersion dans une matrice polymérique très importante observable par microscopie électronique ou optique sur coupes fines. La dispersibilité de la silice est également appréciée au moyen d'un test d'aptitude à la désagglomération aux ultrasons suivi d'une mesure, par diffraction de la lumière sur un granulomètre, de la taille des particules de silice pour déterminer le diamètre médian (D50) des particules et le facteur de désagglomération (Fd) après désagglomération comme décrit dans la demande de brevet EP-A-0 520 860 ou dans l'article paru dans la revue Rubber World, juin 1994, pages 20-24, intitulé "Dispersibility measurements of prec. silicas".

Comme exemples non limitatifs de telles silices hautement dispersibles préférentielles on peut citer celles ayant une surface spécifique BET comprise entre 120 et 250 m2/g, une surface spécifique CTAB comprise entre 120 et 240 m2/g et particulièrement celles décrites dans les demandes de brevet européen EP-A-0 157 703 et EP-A-0 520 862, ou la silice Perkasil KS430 de la Société Akzo, la silice HI-SIL 2000 de la Société PPG, la silice Zeosil 1165 MP de la Société Rhône-Poulenc, la silice BV3370GR de la Société Degussa, la silice Zeopol 8741 et 8745 de la Société Huber.

La surface spécifique CTAB est déterminée selon la méthode NFT 45007 de novembre 1987. La surface spécifique BET est déterminée selon la méthode de BRUNAUER, EMMET, TELLER décrite dans "The Journal of the American Chemical Society", vol. 60, page 309, février 1938, correspondant à la norme NFT 45007 de novembre 1987.

La charge peut comporter une ou plusieurs matières de type silice, par exemple un mélange de diverses silices, un mélange de divers noirs de carbone CSDP ou un mélange d'une ou plusieurs silices avec un ou plusieurs noirs de carbone CSDP ou un ou plusieurs aluminosilicates mais à titre préférentiel la charge de type silice est constituée d'une ou plusieurs silices.

La charge peut comporter en outre des matières qui ne sont pas de type silice, comme par exemple du noir de carbone ou des charges blanches autres que la silice, comme la craie, le kaolin, l'alumine.

Comme noirs de carbone pouvant être mis en oeuvre dans les compositions conformes à l'invention conviennent tous les noirs de carbone, notamment tous les noirs commercialement disponibles ou conventionnellement utilisés dans les pneus et particulièrement dans les bandes de roulement de pneus ainsi que les noirs modifiés en surface par greffage de radicaux organiques. La quantité de noir de carbone présente peut varier dans de larges limites étant toutefois entendu que l'amélioration des propriétés sera d'autant plus importante que le taux de matière de type silice présent est élevé. La quantité de noir de carbone, s'il est utilisé, est telle que le rapport en poids de matière de type silice sur noir est supérieur ou égal à 1 et de préférence supérieur ou égal à 2.

De préférence la ou les matières de type silice représentent de 50 % à 100 % du poids total de la charge.

A titre d'exemple, la charge est constituée de 50 % à 100 % en poids d'une silice précipitée dont la surface spécifique BET est comprise entre 100 et 300 m²/g , de préférence entre 120 et 250 m²/g et de 50 % à 0 % en poids de noir de carbone ayant une surface spécifique BET comprise entre 25 et 160 m²/g.

De préférence la charge représente de 30 à 70 % en poids par rapport au poids de l'élastomère ou de l'ensemble des élastomères.

Dans l'agent de couplage c) de l'invention, les groupes alkyle, aryle ou aralkyle peuvent être le cas échéant substitués par des groupements fonctionnels, par exemple des halogènes, des groupements aminés, alcoxyles, éthers.

De préférence l'agent de couplage c) de l'invention répond à la formule :

NH₂- R¹- Si(OR²)₃₋ₙ (R³)ₙ

dans laquelle :
- n est 0, 1 ou 2
- R¹ est un groupement hydrocarboné comportant de 1 à 20 atomes de carbone,
- OR² est un groupement alcoxy comportant de 1 à 20, de préférence 1 à 5, atomes de carbone, R² étant un groupement hydrocarboné, les groupements OR², s'il y en a plusieurs, pouvant être identiques ou différents,
- R³ est un groupement hydrocarboné comportant de 1 à 20, de préférence 1 à 5, atomes de carbone, les groupements R³, s'il y en a deux, pouvant être identiques ou différents.

Comme exemples de tels composés, on peut citer les 3-aminopropyltriéthoxy (ou triméthoxy) silanes, les 2-aminoéthyltriéthoxy (ou triméthoxy) silanes, les 3-aminopropyldiéthoxy (ou diméthoxy) éthyl silanes, les 3-aminopropyl monoéthoxy (ou monométhoxy) dialkyl ou diarylsilanes.

La composition peut comporter un seul ou plusieurs de ces agents de couplage.

De préférence, dans la composition conforme à l'invention, le rapport entre le poids de l'agent de couplage c) ou de l'ensemble des agents de couplage c), et le poids de la matière de type silice, ou de l'ensemble des matières de type silice, est compris entre 0,01 et 0,20 et plus préférentiellement entre 0,02 et 0,10.

Dans l'agent de recouvrement d) de l'invention, les groupes alkyle, aryle ou aralkyle peuvent être le cas échéant substitués par des groupements fonctionnels à l'exception des groupements aminés ou soufrés, par exemple des halogènes, des groupements alcoxyles ou éthers.

De préférence l'agent de recouvrement d) répond à la formule :

R⁴-Si(OR⁵)₃₋ₙ(R⁶)ₙ

dans laquelle :
- n est 0, 1 ou 2,
- R⁴ est un groupement hydrocarboné comportant de 1 à 20, de préférence de 10 à 20, atomes de carbone,
- OR⁵ est un groupement alcoxy comportant de 1 à 20 atomes de carbone, le groupement R⁵ étant un groupement hydrocarboné, les groupements OR⁵, s'il y en a plusieurs, pouvant être identiques ou différents,
- R⁶ est un groupement hydrocarboné comportant de 1 à 20 atomes de carbone, les groupements R⁶, s'il y en a deux, pouvant être identiques ou différents.

Comme exemples d'agent de recouvrement d) on peut citer les penta (ou hexa ou octa) décyltriéthoxy (ou triméthoxy) silanes, les penta (ou hexa ou octa) décyldiéthoxy (ou diméthoxy) méthyl ou éthyl silanes, les penta (ou hexa ou octa) décyl monoéthoxy (ou monométhoxy) méthyl ou éthyl silanes.

De préférence, dans la composition conforme à l'invention, le rapport entre le poids de l'agent de recouvrement d) ou de l'ensemble des agents de recouvrement d), et le poids de la matière de type silice, ou de l'ensemble des matières de type silice, est compris entre 0,01 et 0,20 et plus préférentiellement entre 0,02 et 0,10.

La composition conforme à l'invention peut réticuler sous l'action du soufre, des peroxydes, des bismaléïmides avec ou sans soufre, sous l'action d'autres agents de réticulation, ou elle peut être dépourvue de système de réticulation, si elle comporte des élastomères thermoplastiques.

La composition conforme à l'invention peut également contenir les autres constituants et additifs habituellement utilisés dans les mélanges de caoutchoucs, comme des plastifiants, des pigments, des antioxydants, des accélérateurs de réticulation, des huiles d'extension, des agents de liaison autres que le ou les aminoalkylalcoxysilanes, des agents de recouvrement autres que le ou les alkylalcoxysilanes. De préférence s'il existe dans la composition des agents de liaisons autres que le ou les aminoalkylalcoxysilanes et/ou des agents de recouvrement autres que le ou les alkylalcoxysilanes, le poids de ces agents est inférieur au poids du ou des aminoalkylalcoxysilanes ou du ou des alkylalcoxysilanes, respectivement.

La composition conforme à l'invention peut être préparée selon des procédés connus de travail thermomécanique des constituants en une ou plusieurs étapes. On peut par exemple l'obtenir par un travail thermomécanique en une étape dans un mélangeur interne qui dure 6 à 10 minutes avec une vitesse moyenne des palettes de 50 tours par minute, jusqu'à atteindre une température de tombée de 170°C ou en deux étapes dans un mélangeur interne qui durent respectivement 4 à 6 minutes et 3 à 5 minutes jusqu'à atteindre une température maximale de tombée de 170°C suivies d'une étape de finition effectuée à 80°C pendant laquelle sont incorporés le soufre et l'accélérateur, dans le cas d'une composition vulcanisable au soufre.

La composition conforme à l'invention peut par exemple être mise en oeuvre pour constituer des bandes de roulement pour pneumatiques comportant une couche de surface en contact avec le sol et une sous couche positionnée entre la couche de surface et les nappes métalliques. La composition de la couche de surface qui doit résister aux agressions du revêtement du sol, en particulier à l'usure, a des taux de charge plus élevés que la sous couche qui doit être très peu hystérétique et pour laquelle une association de silice et de noir de carbone peu renforçant des séries 500, 600 ou 700, comme par exemple les noirs N683 ou N765, est particulièrement adaptée.

L'invention est illustrée par les exemples qui suivent et qui ne sauraient constituer une limitation à la portée de l'invention.

Dans tous les exemples, sauf indication différente, les compositions sont données en parties en poids.

Dans ces exemples, qui peuvent être conformes ou non conformes à l'invention, les propriétés des compositions sont évaluées comme suit, en plus des tests précédemment mentionnés :

### Viscosité Mooney

La viscosité Mooney ML (1+4) est mesurée à 100°C selon la norme ASTM D-1646.

### Rhéométrie

Les mesures de rhéométrie sont effectuées par mesures de couples sur un rhéomètre de Monsanto modèle 100S et elles sont destinées à suivre le processus de vulcanisation en déterminant le temps T° en minutes qui correspond au retard de vulcanisation et le temps T99 en minutes qui correspond à 99 % du couple maximum mesuré.

### Dureté Shore

La dureté Shore A est mesurée à 23° selon la norme ASTM 2240-91.

### Modules d'allongement

On mesure les modules d'allongement à 100% (MA100)et à 300% (MA300) selon la norme ISO37-1977.
Le rapport MA300/MA100 est un indice d'interaction élastomère-charge et un indice de renforcement : en effet, lorsque ce rapport augmente, l'abrasion et la résistance aux agressions des compositions sont améliorées.

### Indices de cassage Scott

Ces indices sont mesurés à 23°C. On détermine la force à la rupture (FR) en MPa et l'allongement à la rupture (AR) en %.

### Pertes hystérétiques (PH)

Les pertes hystérétiques (PH), ou hystérèse, sont mesurées par rebond à 23°C et à 60°C selon la norme ISO R17667 et exprimées en %.

### Mesures au flexomètre

L'augmentation de température T2 - T1 en °C est déterminée au flexomètre selon la norme ASTM D623. Elle caractérise l'échauffement du matériau sous sollicitation mécanique.

### Propriétés dynamiques à 23°C

On détermine le module élastique E' en MPa qui caractérise la rigidité, ainsi que la tangente delta (tg del), qui est le maximum de la tangente de l'angle de pertes et qui caractérise l'hystérèse. Ces mesures sont effectuées selon la norme ASTM-D2231-71.

### Abrasion

La mesure d'abrasion se fait par perte relative de volume selon la norme DIN 53-516.

### Exemple 1

Cet exemple a pour but de comparer des compositions de caoutchouc naturel avec la charge silice Ultrasil VN3 de Degussa. Ces compositions sont données dans le tableau 1. Elles mettent en oeuvre, dans le cas de l'essai 1, une association de l'aminopropyltriéthoxysilane A1100 et de l'hexadécyltriméthoxysilane Si116, dans le cas de l'essai 2, le A1100 seul, dans le cas de l'essai 3 le Si 116 seul et dans le cas de l'essai 4, l'agent de couplage classique Si69. L'essai 1 est donc conforme à l'invention, les essais 2 à 4 sont des essais comparatifs non conformes à l'invention, l'essai 4 étant représentatif d'une composition connue servant de référence. Toutes ces compositions sont vulcanisables au soufre.

Les caractéristiques des constituants sont les suivantes :
- Caoutchouc naturel peptisé de Mooney ML 1+4 à 100°C égal à 60
- Silice Ultrasil VN3 de Degussa de surface spécifique CTAB 164 m2/g, de diamètre médian de particule après désagglomération D50 = 8µ, et de facteur de désagglomération Fd = 3 ml
- Silane Si69 liquide de Degussa
- Aminopropyltriéthoxysilane A1100 de Union Carbide
- Hexadécyltriméthoxysilane Si116 de Degussa
- Antioxydant : N-(1,3-diméthylbutyl) N'-phényl -p-phénylène diamine
- Paraffine : mélange de cires macro et microcristallines
- Sulfénamide : N-cyclohexyl-2-benzothiazyl-sulfénamide

Les compositions des essais 1 à 4 sont obtenues par mise en oeuvre de tous les ingrédients, sauf le soufre et l'accélérateur, par un travail thermomécanique en 1 étape dans un mélangeur interne qui dure environ 7 minutes avec une vitesse moyenne des palettes de 50 tours par minute jusqu'à atteindre une température de tombée de 170°C suivi d'une étape de finition effectuée à 80°C, pendant laquelle sont incorporés le soufre et l'accélérateur.

**TABLEAU 1**

| **Composition** | **Essai 1** | **Essai 2** | **Essai 3** | **Essai 4** |
|---|---|---|---|---|
| Caoutchouc naturel | 100 | 100 | 100 | 100 |
| Silice Ultrasil VN3 | 50 | 50 | 50 | 50 |
| Si69 | - | - | - | 5 |
| A1100 | 2,05 | 4,1 | - | - |
| Si116 | 3,2 | | 6,4 | - |
| Oxyde de zinc | 3 | 3 | 3 | 3 |
| Acide stéarique | 2,5 | 2,5 | 2,5 | 2,5 |
| Antioxydant | 1,5 | 1,5 | 1,5 | 1,5 |
| Paraffine | 1 | 1 | 1 | 1 |
| Soufre | 2 | 2 | 2,4 | 1,1 |
| Sulfénamide | 2,66 | 3,00 | 3,20 | 1,45 |

Dans chaque essai, les silanes sont utilisés avec le même taux global de fonctions trialcoxysilanes de façon à comparer des mélanges ayant le même recouvrement de la charge silice. Les taux de soufre et de sulfénamide sont ajustés de façon à obtenir des mélanges de duretés shore proches pour faciliter les comparaisons des propriétés hystérétiques des mélanges.

La vulcanisation est effectuée à 150°C pendant le temps T99 en minutes qui est donné dans le tableau 2.

On compare entre elles les propriétés de ces quatre compositions tant à l'état non vulcanisé qu'à l'état vulcanisé. Les résultats sont consignés dans le tableau 2.

On constate que la composition de l'essai 2, dans lequel le silane A1100 est mis en oeuvre seul, possède à cru une valeur Mooney très élevée non mesurable et un temps de retard à la vulcanisation très faible (To de 1 minute). Une telle composition, fournit des mélanges trop durs et trop grillants pour être mis en oeuvre dans une installation industrielle.

La composition de l'essai 3, qui met en oeuvre le Si116 seul, a un module à 300 % faible avec comme conséquence une interaction élastomère-charge, caractérisée par le rapport MA300/MA100, très faible et un renforcement insuffisant comme le montrent les résultats d'abrasion.

La comparaison des essais 1 et 4 donne les informations suivantes :
- le temps de retard est pratiquement le même (To de 8 minutes contre 9 minutes), ce qui fournit une sécurité d'emploi semblable,
- le niveau d'hystérèse de l'essai 1 (PH à 23 et 60°C, échauffement au flexomètre et tg del en propriétés dynamiques) est très inférieur à celui de l'essai 4 pour une dureté shore équivalente,
- les propriétés de renforcement, données par le rapport MA300/MA100 et par les indices de cassage Scott sont meilleures pour l'essai 1,
- les caractéristiques d'abrasion sont équivalentes.

L'ensemble de ces résultats permet donc de prévoir avec la composition de l'essai 1 conforme à l'invention, par comparaison avec la composition classique de l'essai 4 comprenant l'agent de couplage Si69, la confection de bandes de roulement pour enveloppes de pneumatiques ayant une résistance au roulement et un échauffement inférieurs avec comme conséquence une économie de carburant et une augmentation de la durée de vie de l'enveloppe sans déchéance pour les caractéristiques de résistance aux agressions et à l'usure.

**TABLEAU 2**

| **Composition** | **Essai 1** | **Essai 2** | **Essai 3** | **Essai 4** |
|---|---|---|---|---|
| Silanes | A1100 +Si116 | A1100 | Si116 | Si69 |

| Propriétés classiques de caoutchouterie | | | | |
|---|---|---|---|---|
| Mooney | 77 | dur | 44 | 53 |

| Rhéomètre 150°C | | | | |
|---|---|---|---|---|
| Temps de retard To (min) | 8 | 1 | 19 | 9 |
| T99, minutes | 14 | 5 | 32 | 39 |

| Propriétés à l'état vulcanisé | | | | |
|---|---|---|---|---|
| Dureté shore A | 57,3 | 63,2 | 58,8 | 58,9 |
| | | | | |
| MA100 | 1,45 | 1,73 | 1,58 | 1,41 |
| MA300 | 1,52 | 2,07 | 1,20 | 1,26 |
| MA300/MA100 | 1,05 | 1,19 | 0,75 | 0,89 |

| Indices de cassage Scott à | | | | |
|---|---|---|---|---|
| 23°C FR | 30 | 31 | 25 | 26 |
| 23°C AR% | 645 | 594 | 618 | 624 |
| | | | | |
| PH à 23°C | 15,4 | 19,6 | 15,9 | 25,4 |
| PH à 60°C | 12,1 | 16,5 | 13,2 | 19,5 |
| | | | | |
| Flexomètre T2-T1(°C) | 11 | 20 | 14 | 21 |

| Propriétés dynamiques à 23°C | | | | |
|---|---|---|---|---|
| E' en MPa | 2,28 | 3,56 | 2,31 | 3,57 |
| tg del | 0,074 | 0,097 | 0,071 | 0,123 |
| | | | | |
| Abrasion DIN | 99 | 92 | 129 | 100 |

### Exemple 2

Dans l'exemple 2, les quatre compositions de l'exemple 1 ont été reproduites ainsi que leurs modes d'obtention en remplaçant la silice Ultrasil VN3 par la silice Zeosil 1165 MP dont la dispersibilité est améliorée. Après désagglomération au moyen d'ultrasons, cette silice de surface spécifique CTAB 160 m2/g a un diamètre médian des particules D50 égal à 5µ et un facteur de désagglomération Fd égal à 8 ml.

L'essai 5 est conforme à l'invention, les essais 6 à S étant des essais témoins, l'essai 8 servant de référence pour les mêmes raisons que l'essai 4 de l'exemple 1.

La vulcanisation est effectuée à 150°C durant le temps T99 en minutes qui est donné dans le tableau 3.

On compare entre elles les propriétés de ces quatre compositions tant à l'état non vulcanisé qu'à l'état vulcanisé. Les résultats sont consignés dans le tableau 3.

Cet exemple 2 permet de faire des constatations analogues à celles de l'exemple 1 en comparant l'essai 5 conforme à l'invention aux essais témoins 6 à 8.

**TABLEAU 3**

| **Composition** | **Essai 5** | **Essai 6** | **Essai 7** | **Essai 8** |
|---|---|---|---|---|
| Silanes | A1100 +Si116 | A1100 | Si116 | Si69 |

| Propriétés classiques de caoutchouterie | | | | |
|---|---|---|---|---|
| Mooney | 70 | dur | 39 | 48 |

| Rhéomètre 150°C | | | | |
|---|---|---|---|---|
| Temps de retard To (min) | 9 | 1 | 12 | 9 |
| T99, minutes | 17 | 4 | 25 | 35 |

| Propriétés à l'état vulcanisé | | | | |
|---|---|---|---|---|
| Dureté shore A | 57,6 | 61,6 | 59,6 | 60,7 |
| | | | | |
| MA100 | 1,49 | 1,62 | 1,49 | 1,49 |
| MA300 | 1,52 | 2,13 | 1,13 | 1,46 |
| MA300/MA100 | 1,02 | 1,31 | 0,76 | 0,98 |

| Indices de cassage Scott à | | | | |
|---|---|---|---|---|
| 23°C FR | 30 | 30 | 26 | 28 |
| 23°C AR% | 623 | 578 | 615 | 638 |
| | | | | |
| PH à 23°C | 14,7 | 18,0 | 17,9 | 25,4 |
| PH à 60°C | 12,1 | 14,9 | 14,3 | 18,7 |
| | | | | |
| Flexomètre T2-T1(°C) | 10 | 15 | 14 | 19 |

| Propriétés dynamiques à 23°C | | | | |
|---|---|---|---|---|
| E' en MPa | 2,31 | 3,99 | 2,45 | 4,05 |
| tg del | 0,075 | 0,100 | 0,084 | 0,139 |
| | | | | |
| Abrasion DIN | 105 | 96 | 122 | 100 |

### Exemple 3

Dans cet exemple 3, les 4 compositions de l'exemple 2 avec la silice Zeosil 1165MP ont été reproduites ainsi que leurs modes d'obtention en remplaçant le caoutchouc naturel par un coupage de caoutchouc naturel et de polybutadiène cis-1,4 avec un rapport en poids caoutchouc naturel sur polybutadiène de 70/30.

L'essai 9 est conforme à l'invention, les essais 10 à 12 sont comparatifs, l'essai 12 étant l'essai de référence pour les mêmes raisons que dans l'exemple 1.

Les caractéristiques du polybutadiène cis-1,4 préparé en solution avec un catalyseur à base de titane sont les suivantes :
- taux de cis-1,4 : 92%,
- Viscosité Mooney : 45

La vulcanisation est effectuée à 150°C pendant le temps T99 en minutes qui est donné dans le tableau 4.

On compare entre elles les propriétés de ces quatre compositions tant à l'état non vulcanisé qu'à l'état vulcanisé. Les résultats sont consignés dans le tableau 4,

Cet exemple 3 permet de faire des constatations analogues à celles de l'exemple 1 en comparant l'essai 9 conforme à l'invention aux essais témoins 10 à 12.

**TABLEAU 4**

| **Composition** | **Essai 9** | **Essai 10** | **Essai 11** | **Essai 12** |
|---|---|---|---|---|
| Silanes | A1100 +Si116 | A1100 | Si116 | Si69 |

| Propriétés classiques de caoutchouterie | | | | |
|---|---|---|---|---|
| Mooney | 69 | 128 | 40 | 50 |

| Rhéomètre 150°C | | | | |
|---|---|---|---|---|
| Temps de retard To (min) | 11 | 2 | 18 | 11 |
| T99, minutes | 20 | 6 | 32 | 47 |

| Propriétés à l'état vulcanisé | | | | |
|---|---|---|---|---|
| Dureté shore A | 57,8 | 62,9 | 59,0 | 62,3 |
| | | | | |
| MA100 | 1,41 | 1,70 | 1,48 | 1,58 |
| MA300 | 1,24 | 1,82 | 1,06 | 1,39 |
| MA300/MA100 | 0,88 | 1,07 | 0,72 | 0,88 |

| Indices de cassage Scott à | | | | |
|---|---|---|---|---|
| 23°C FR | 22 | 25 | 13 | 25 |
| 23°C AR% | 601 | 611 | 493 | 685 |
| | | | | |
| PH à 23°C | 18,9 | 19,8 | 20,6 | 30,6 |
| PH à 60°C | 14,5 | 16,4 | 15,6 | 22,4 |

| Propriétés dynamiques à 23°C | | | | |
|---|---|---|---|---|
| E' en MPa | 3,02 | 5,27 | 2,84 | 4,99 |
| tg del | 0,094 | 0,112 | 0,090 | 0,153 |

### Example 4

Dans cet exemple 4, les 4 compositions de l'exemple 2 avec la silice Zeosil 1165MP ont été reproduites ainsi que leur mode d'obtention en remplaçant la silice Zeosil 1165MP par un coupage de silice Zeosil 1165MP et de noir de carbone N234 avec un rapport en poids silice sur noir de carbone égal à 35/15.

Les taux de silane ont été ajustés au nouveau taux de silice. Les compositions sont données dans le tableau 5.

**TABLEAU 5**

| **Composition** | **Essai 13** | **Essai 14** | **Essai 15** | **Essai 16** |
|---|---|---|---|---|
| Caoutchouc naturel | 100 | 100 | 100 | 100 |
| Silice Zeosil 1165MP | 35 | 35 | 35 | 35 |
| Noir N234 | 15 | 15 | 15 | 15 |
| Si69 | - | - | - | 3,5 |
| A1100 | 1,43 | 2,87 | - | - |
| Si116 | 2,24 | - | 4,48 | - |
| Oxyde de zinc | 3 | 3 | 3 | 3 |
| Acide stéarique | 2,5 | 2,5 | 2,5 | 2,5 |
| Antioxydant | 1,5 | 1,5 | 1,5 | 1,5 |
| Paraffine | 1 | 1 | 1 | 1 |
| Soufre | 2 | 2 | 2,4 | 1,1 |
| Sulfénamide | 2,66 | 2,80 | 3,20 | 1,45 |

L'essai 13 est conforme à l'invention, les essais 14 à 16 sont comparatifs, l'essai 16 étant l'essai de référence pour les mêmes raisons que dans l'exemple 1.

La vulcanisation est effectuée à 150°C pendant le temps T99 en minutes qui est donné dans le tableau 6.

On compare entre elles les propriétés de ces quatre compositions tant à l'état non vulcanisé qu'à l'état vulcanisé. Les résultats sont consignés dans le tableau 6.

Cet exemple 4 permet de faire des constatations analogues à celles de l'exemple 1 en comparant l'essai 13 conforme à l'invention aux essais témoins 14 à 16.

**TABLEAU 6**

| **Composition** | **Essai 13** | **Essai 14** | **Essai 15** | **Essai 16** |
|---|---|---|---|---|
| Silanes | A1100 +Si116 | A1100 | Si116 | Si69 |

| Propriétés classiques de caoutchouterie | | | | |
|---|---|---|---|---|
| Mooney | 60 | 82 | 40 | 48 |

| Rhéomètre 150°C | | | | |
|---|---|---|---|---|
| Temps de retard To (min) | 7 | 3 | 7 | 7 |
| T99, minutes | 15 | 7 | 15 | 26 |

| Propriétés à l'état vulcanisé | | | | |
|---|---|---|---|---|
| Dureté shore A | 62 | 63 | 66 | 61 |
| | | | | |
| MA100 | 2,05 | 2,23 | 2,28 | 1,61 |
| MA300 | 2,28 | 2,82 | 2,22 | 1,70 |
| MA300/MA100 | 1,11 | 1,26 | 0,97 | 1,05 |

| Indices de cassage Scott à | | | | |
|---|---|---|---|---|
| 23°C FR | 29 | 31 | 26 | 29 |
| 23°C AR% | 552 | 530 | 500 | 625 |
| | | | | |
| PH à 23°C | 15,9 | 15,7 | 18,7 | 27,3 |
| PH à 60°C | 12,1 | 12,3 | 13,8 | 18,6 |

| Propriétés dynamiques à 23°C | | | | |
|---|---|---|---|---|
| E' en MPa | 2,78 | 3,40 | 3,18 | 3,64 |
| tg del | 0,086 | 0,092 | 0,085 | 0,143 |
| | | | | |
| Abrasion DIN | 110 | 105 | 135 | 100 |

### Exemple 5

Dans cet exemple 5, les 4 compositions de l'exemple 4 avec le coupage de silice Zeosil 1165MP et de noir de carbone N234 ont été reproduites ainsi que leur mode d'obtention en remplaçant le caoutchouc naturel par un coupage caoutchouc naturel-polybutadiène cis-1,4 dans un rapport en poids de caoutchouc naturel sur polybutadiène cis-1,4 égal à 70/30.

Les caractéristiques du polybutadiène cis-1,4 préparé en solution avec un catalyseur à base de titane sont fournies dans l'exemple 3

Les compositions sont données dans le tableau 7.

**TABLEAU 7**

| **Composition** | **Essai 17** | **Essai 18** | **Essai 19** | **Essai 20** |
|---|---|---|---|---|
| Caoutchouc naturel | 70 | 70 | 70 | 70 |
| Polybutadiène cis-1,4 | 30 | 30 | 30 | 30 |
| Silice Zeosil 1165MP | 35 | 35 | 35 | 35 |
| Noir N234 | 15 | 15 | 15 | 15 |
| Si69 | - | - | - | 3,5 |
| A1100 | 1,43 | 2,87 | - | - |
| Si116 | 2,24 | - | 4,48 | - |
| Oxyde de zinc | 3 | 3 | 3 | 3 |
| Acide stéarique | 2,5 | 2,5 | 2,5 | 2,5 |
| Antioxydant | 1,5 | 1,5 | 1,5 | 1,5 |
| Paraffine | 1 | 1 | 1 | 1 |
| Soufre | 2 | 2 | 2,4 | 1,1 |
| Sulfénamide | 2,66 | 2,80 | 3,20 | 1,45 |

L'essai 17 est conforme à l'invention, les essais 18 à 20 sont comparatifs, l'essai 20 étant l'essai de référence pour les mêmes raisons que dans l'exemple 1.

La vulcanisation est effectuée à 150°C pendant le temps T99 en minutes qui est donné dans le tableau 8.

On compare entre elles les propriétés de ces quatre compositions tant à l'état non vulcanisé qu'à l'état vulcanisé. Les résultats sont consignés dans le tableau 8.

Cet exemple 5 permet de faire des constatations analogues à celles de l'exemple 1 en comparant l'essai 17 conforme à l'invention aux essais témoins 18 à 20.

**TABLEAU 8**

| **Composition** | **Essai 17** | **Essai 18** | **Essai 19** | **Essai 20** |
|---|---|---|---|---|
| Silanes | A1100 +Si116 | A1100 | Si116 | Si69 |

| Propriétés classiques de caoutchouterie | | | | |
|---|---|---|---|---|
| Mooney | 60 | 90 | 42 | 50 |

| Rhéomètre 150°C | | | | |
|---|---|---|---|---|
| Temps de retard To (min) | 7 | 4 | 7 | 8 |
| T99, minutes | 15 | 9 | 16 | 31 |

| Propriétés à l'état vulcanisé | | | | |
|---|---|---|---|---|
| Dureté shore A | 64 | 65 | 65 | 63 |
| | | | | |
| MA100 | 2,05 | 2,14 | 2,15 | 1,65 |
| MA300 | 2,04 | 2,48 | 1,97 | 1,54 |
| MA300/MA100 | 1,00 | 1,16 | 0,92 | 0,93 |

| Indices de cassage Scott à | | | | |
|---|---|---|---|---|
| 23°C FR | 23 | 24 | 17 | 26 |
| 23°C AR% | 504 | 486 | 424 | 606 |
| | | | | |
| PH à 23°C | 19,4 | 19,1 | 20,0 | 28,8 |
| PH à 60°C | 14,3 | 15,0 | 14,4 | 21,5 |

| Propriétés dynamiques à 23°C | | | | |
|---|---|---|---|---|
| E' en MPa | 3,41 | 4,38 | 3,54 | 3,98 |
| tg del | 0,094 | 0,110 | 0,091 | 0,147 |

### Exemple 6

Dans cet exemple on compare diverses compositions comportant du caoutchouc naturel seul ou en coupage avec un autre caoutchouc diénique, ainsi que de la silice seule ou en coupage avec du noir de carbone.

Ces compositions sont données dans le tableau 9.

Les caractéristiques de la silice Hi-Sil 2000 qui est le seul nouveau constituant sont les suivantes :
- surface spécifique CTAB : 214 m2/g,
- après désagglomération aux ultrasons, diamètre médian de particule D50 =9 microns et facteur de désagglomération Fd = 2 ml.

Les compositions des essais 21 à 28 sont mises en oeuvre par un travail en une étape comme dans l'exemple 1.

**TABLEAU 9**

| **Composition** | **Essai 21** | **Essai 22** | **Essai 23** | **Essai 24** | **Essai 25** | **Essai 26** | **Essai 27** | **Essai 28** |
|---|---|---|---|---|---|---|---|---|
| Caoutchouc naturel | 100 | 100 | 70 | 70 | 100 | 100 | 70 | 70 |
| Polybutadiène cis-1,4 | - | - | 30 | 30 | - | - | 30 | 30 |
| Silice Hi-Sil 2000 | 40 | 40 | 40 | 40 | 27 | 27 | 27 | 27 |
| Noir N234 | - | - | - | - | 13 | 13 | 13 | 13 |
| Silane Si69 | - | 5 | - | 5 | - | 3,5 | - | 3,5 |
| Silane A1100 | 2,05 | - | 2,05 | - | 1,43 | - | 1,43 | - |
| Silane Si116 | 3,20 | - | 3,2 | - | 2,24 | - | 2,24 | - |
| Oxyde de zinc | 3 | 3 | 3 | 3 | 3 | 3 | 3 | 3 |
| Acide stéarique | 2,5 | 2,5 | 2,5 | 2,5 | 2,5 | 2,5 | 2,5 | 2,5 |
| Antioxydant | 1,5 | 1,5 | 1,5 | 1,5 | 1,5 | 1,5 | 1,5 | 1,5 |
| Paraffine | 2 | 2 | 2 | 2 | 2 | 2 | 2 | 2 |
| Soufre | 2,00 | 1,10 | 2,00 | 1,10 | 2,00 | 1,10 | 2,00 | 1,10 |
| Sulfénamide | 2,66 | 1,45 | 2,66 | 1,45 | 2,66 | 1,45 | 2,66 | 1,45 |

Les compositions 21, 23, 25, 27 sont conformes à l'invention, les compositions 22, 24, 26 et 28 étant les compositions témoins avec l'agent de couplage Si69.

Dans chaque essai, les silanes sont utilisés avec le même taux global de fonctions trialcoxysilanes par rapport à l'unité de surface de silice utilisée et dans des rapports nombre de groupements trialcoxysilanes par unité de surface de silice identiques à ceux de l'exemple 1, Les taux de soufre et d'accélérateur sont ajustés de façon à obtenir des mélanges de duretés shore proches pour faciliter les comparaisons des propriétés hystérétiques.

La vulcanisation est effectuée à 150°C durant le temps T99 en minutes qui est donné dans le tableau 10.

On compare entre elles les propriétés des compositions des couples d'essais 21 et 22, 23 et 24, 25 et 26 et enfin 27 et 28 tant à l'état non vulcanisé qu'à l'état vulcanisé. les résultats sont consignés dans le tableau 10.

On constate que les variations de propriétés des compositions avec l'association Al100-Si116 conformes à l'invention par rapport aux témoins avec Si69 sont comparables à celles précédemment observées dans le cas des silices de surface spécifique CTAB inférieure.

L'association d'un aminoalkyltrialcoxysilane avec un alkyltrialcoxysilane permet donc avec une silice de surface spécifique CTAB d'environ 200 m²/g de disposer de compositions ayant une sécurité d'emploi comparable à celle du témoin mettant en oeuvre l'agent de couplage classique Si69 avec un niveau d'hystérèse bien inférieur, ce qui permet de confectionner des bandes de roulement pour pneumatiques permettant une économie de carburant et un échauffement inférieur favorable à l'amélioration de la durée de vie du pneumatique.

**TABLEAU 10**

| **Composition** | **Essai 21** | **Essai 22** | **Essai 23** | **Essai 24** | **Essai 25** | **Essai 26** | **Essai 27** | **Essai 28** |
|---|---|---|---|---|---|---|---|---|
| Propriétés classiques de caoutchouterie | | | | | | | | |
| Mooney | dur | dur | 84 | 63 | 71 | 59 | 74 | 57 |

| Rhéomètre 150°C | | | | | | | | |
|---|---|---|---|---|---|---|---|---|
| Temps de retard To (min) | 4 | 10 | 6 | 11 | 5 | 6 | 5 | 7 |
| T99, minutes | 7 | 32 | 12 | 37 | 10 | 19 | 11 | 27 |

| Propriétés à l'état vulcanisé | | | | | | | | |
|---|---|---|---|---|---|---|---|---|
| Dureté shore A | 64 | 64 | 66 | 63 | 66 | 62 | 65 | 62 |
| | | | | | | | | |
| MA100 | 2,17 | 2,18 | 2,34 | 1,95 | 2,85 | 1,95 | 2,58 | 1,88 |
| MA300 | 1,75 | 1,69 | 1,75 | 1,52 | 2,59 | 1,71 | 2,23 | 1,60 |
| MA300/MA100 | 0,81 | 0,77 | 0,75 | 0,78 | 0,91 | 0,87 | 0,86 | 0,85 |

| Indices de cassage Scott à | | | | | | | | |
|---|---|---|---|---|---|---|---|---|
| 23°C FR | 29 | 20 | 19 | 16 | 30 | 22 | 18 | 19 |
| 23°C AR% | 620 | 513 | 560 | 560 | 564 | 540 | 470 | 580 |
| | | | | | | | | |
| PH à 23°C | 20,7 | 25,0 | 17,4 | 26,1 | 16,0 | 25,5 | 15,0 | 25,0 |
| PH à 60°C | 16,5 | 18,5 | 13,4 | 20,5 | 12,3 | 18,9 | 11,3 | 19,1 |

| Propriétés dynamiques à 23°C | | | | | | | | |
|---|---|---|---|---|---|---|---|---|
| E' en MPa | 2,66 | 2,98 | 2,69 | 3,10 | 2,82 | 2,72 | 2,84 | 3,01 |
| tg del | 0,059 | 0,099 | 0,062 | 0,112 | 0,060 | 0,107 | 0,065 | 0,113 |
| | | | | | | | | |
| Abrasion DIN | 103 | 100 | - | - | 100 | 94 | - | - |

En résumé, la composition de l'invention permet les avantages suivants si on la compare aux compositions connues, à base de caoutchouc et de silice, qui utilisent les agents de couplage les plus efficaces de la famille des silanes :
- une perte hystérétique plus faible, ce qui se traduit par une résistance au roulement et un échauffement inférieurs, en particulier dans la bande de roulement des enveloppes de pneumatiques ;
- de meilleures propriétés de renforcement.

Ces avantages sont obtenus sans qu'il y ait une dégradation des conditions de mise en oeuvre ou des caractéristiques d'abrasion.

### Exemple 7

Dans cet exemple, on compare diverses compositions conformes à l'invention comportant du caoutchouc naturel ainsi que de la silice seule ou en coupage avec du noir de carbone fin à des compositions témoins usuelles pour articulations élastiques de liaison au sol de véhicules.

Les compositions des essais conformes à l'invention sont celles décrites auparavant sous les numéros d'essais 5, 21 et 25. Les compositions témoins sont celles décrites pour les essais 29, 30 et 31 et contiennent des charges renforçantes grossières. Toutes ces compositions sont consignées dans le tableau 11.

**TABLEAU 11**

| **Composition** | **Essai 5** | **Essai 21** | **Essai 25** | **Essai 29** | **Essai 30** | **Essai 31** |
|---|---|---|---|---|---|---|
| Caoutchouc naturel | 100 | 100 | 100 | 100 | 100 | 100 |
| Silice Ultrasil 360 | | | | | 60 | 20 |
| Silice Zéosil 1165 MP | 50 | | | | | |
| Silice Hi-Sil 2000 | | 40 | 27 | | | |
| Si69 | | | | | 1,8 | 0,6 |
| Noir N234 | | | 13 | | | |
| Noir N765 | | | | 43 | | 25 |
| A1100 | 2.05 | 2.05 | 1.43 | | | |
| Si116 | 3.2 | 3.2 | 2.24 | | | |
| Oxyde de zinc | 3 | 3 | 3 | 5 | 5 | 5 |
| Acide stéarique | 2.5 | 2.5 | 2.5 | 2 | 2 | 2 |
| Antioxydant | 1.5 | 1.5 | 1.5 | 1.5 | 1.5 | 1.5 |
| Paraffine | 1 | 1 | 1 | 1 | 1 | 1 |
| Soufre | 2 | 2 | 2 | 2.5 | 2.5 | 2.5 |
| Sulfénamide | 2.66 | 2.66 | 2.66 | 2.1 | 2.1 | 2.1 |

| **Propriétés à l'état vulcanisé** | | | | | | |
|---|---|---|---|---|---|---|
| Dureté Shore A | 58 | 64 | 66 | 63 | 65 | 64 |

| Indices de cassage Scott à : | | | | | | |
|---|---|---|---|---|---|---|
| 23 °C FR | 30 | 29 | 30 | 20 | 22 | 19 |
| 23 °C AR % | 623 | 620 | 564 | 482 | 507 | 410 |

| Propriétés dynamiques à 23 °C : | | | | | | |
|---|---|---|---|---|---|---|
| E' en Mpa | 2.31 | 2.66 | 2.82 | 2.28 | 2.72 | 2.34 |
| tg del | 0.075 | 0.059 | 0.060 | 0.083 | 0.084 | 0.062 |

Les résultats montrent que les compositions conformes à l'invention qui comprennent des charges renforçantes fines possèdent, outre des propriétés hystérétiques améliorées, un niveau de renforcement bien supérieur à celui des compositions témoins, matérialisé par des indices de cassage Scott supérieurs.

Bien entendu, l'invention n'est pas limitée aux exemples de réalisation précédemment décrits à partir desquels on peut envisager d'autres modes de réalisation.

## Revendications

1. Composition de caoutchouc, **caractérisée en ce qu'**elle comporte :
a) au moins un élastomère diénique ayant des fonctions oxygénées ;
b) une charge constituée au moins en partie d'au moins une matière, dite "de type silice", choisie dans le groupe formé par les silices et les matières autres que les silices possédant en surface des fonctions oxygénées du silicium ;
c) au moins un agent de couplage choisi dans le groupe formé par les aminoalkylalcoxysilanes, les aminoarylalcoxysilanes et les aminoaralkylalcoxysilanes, les groupes alkyle, aryle ou aralkyle pouvant être le cas échéant substitués par des groupements fonctionnels ;
d) au moins un agent de recouvrement choisi dans le groupe formé par les alkylalcoxysilanes, les arylalcoxysilanes et les aralkylalcoxysilanes, les groupes alkyle, aryle ou aralkyle pouvant être le cas échéant substitués par des groupements fonctionnels à l'exception des groupements aminés ou soufrés.

2. Composition selon la revendication 1, **caractérisée en ce que** l'élastomère diénique à fonctions oxygénées est un élastomère synthétique, ces fonctions étant introduites dans le polymère lors de la synthèse de celui-ci, ou par un traitement ultérieur effectué sur le polymère pour introduire ces fonctions.

3. Composition selon l'une quelconque des revendications 1 ou 2, **caractérisée en ce que** l'élastomère diénique à fonctions oxygénées est le caoutchouc naturel.

4. Composition selon la revendication 3, **caractérisée en ce que** le caoutchouc naturel représente 50 % à 100 % en poids du ou des élastomères oxygénés.

5. Composition selon l'une quelconque des revendications 1 à 3, **caractérisée en ce qu'**elle comporte en outre un ou plusieurs élastomère(s) diénique(s) dépourvu(s) de fonctions oxygénées.

6. Composition selon la revendication 5, **caractérisée en ce que** le rapport en poids du ou des élastomère(s) diénique(s) à fonctions oxygénées et du ou des élastomère(s) diénique(s) dépourvu(s) de fonctions oxygénées est supérieur à 1.

7. Composition selon l'une quelconque des revendications 1 à 6, **caractérisée en ce que** la matière de type silice est un noir de carbone CSDP (Carbon-Silica Dual Phase filler) ayant en surface une phase carbonée et une phase constituée de domaine où se trouve de la silice finement divisée, et/ou un aluminosilicate.

8. Composition selon l'une quelconque des revendications 1 à 7, **caractérisée en ce que** la matière de type silice est de la silice précipitée.

9. Composition selon l'une quelconque des revendications 1 à 8, **caractérisée en ce que** la ou les matières de type silice représentent de 50 % à 100 % du poids total de la charge.

10. Composition selon la revendication 9, **caractérisée en ce que** la charge est constituée de 50 % à 100 % en poids d'une silice précipitée dont la surface spécifique BET est comprise entre 100 et 300 m²/g , de préférence entre 120 et 250 m²/g et de 50 % à 0 % en poids de noir de carbone.

11. Composition selon l'une quelconque des revendications 1 à 10, **caractérisée en ce que** la charge représente de 30 à 70 % en poids par rapport au poids de l'élastomère ou de l'ensemble des élastomères.

12. Composition selon l'une quelconque des revendications 1 à 11, **caractérisée en ce que** l'agent de couplage c) répond à la formule :
NH₂- R¹- Si(OR²)₃₋ₙ (R³)ₙ
dans laquelle :
- n est 0, 1 ou 2
- R¹ est un groupement hydrocarboné comportant de 1 à 20 atomes de carbone,
- OR² est un groupement alcoxy comportant de 1 à 20, de préférence 1 à 5, atomes de carbone, R² étant un groupement hydrocarboné, les groupements OR², s'il y en a plusieurs, pouvant être identiques ou différents,
- R₃ est un groupement hydrocarboné comportant de 1 à 20, de préférence 1 à 5, atomes de carbone, les groupements R³, s'il y en a deux, pouvant être identiques ou différents.

13. Composition selon l'une quelconque des revendications 1 à 12, **caractérisée en ce que** l'agent de recouvrement d) répond à la formule :
R⁴-Si(OR⁵)₃₋ₙ(R⁶)ₙ
dans laquelle :
- n est 0, 1 ou 2,
- R⁴ est un groupement hydrocarboné comportant de 1 à 20, de préférence de 10 à 20, atomes de carbone,
- OR⁵ est un groupement alcoxy comportant de 1 à 20 atomes de carbone, le groupement R⁵ étant un groupement hydrocarboné, les groupements OR⁵, s'il y en a plusieurs, pouvant être identiques ou différents,
- R⁶ est un groupement hydrocarboné comportant de 1 à 20 atomes de carbone, les groupements R⁶, s'il y en a deux, pouvant être identiques ou différents.

14. Composition selon l'une quelconque des revendications 1 à 13, **caractérisée en ce que** le rapport entre le poids de l'agent de couplage c), ou de l'ensemble des agents de couplage c), et le poids de la matière de type silice, ou de l'ensemble des matières de type silice, est compris entre 0,01 et 0,20, de préférence entre 0,02 et 0,10.

15. Composition selon l'une quelconque des revendications 1 à 14, **caractérisée en ce que** le rapport entre le poids de l'agent de recouvrement d), ou de l'ensemble des agents de recouvrement d), et le poids de la matière de type silice, ou de l'ensemble des matières de type silice, est compris entre 0,01 et 0,20, de préférence entre 0,02 et 0,10.

16. Article comportant au moins une composition selon l'une quelconque des revendications 1 à 15.

17. Article selon la revendication 16, **caractérisé en ce qu'**il est une bande de roulement.

18. Article selon la revendication 16, **caractérisé en ce qu'**il est une enveloppe de pneumatique.

19. Article selon la revendication 16, **caractérisé en ce qu'**il s'agit d'une articulation élastique de liaison au sol pour véhicules.

## Patentansprüche

1. Kautschukmischung, **dadurch gekennzeichnet, dass** sie enthält:
a) mindestens ein Dienelastomer mit sauerstoffhaltigen Gruppen;
b) einen Füllstoff, der zumindest zum Teil aus mindestens einem Material vom sog. "Kieselsäuretyp" besteht, der unter den Kieselsäuren und den von den Kieselsäuren verschiedenen Materialien ausgewählt ist, die an der Oberfläche sauerstoffhaltige Siliciumgruppen tragen;
c) mindestens ein Kupplungsmittel, das unter den Aminoalkylalkoxysilanen, Aminoarylalkoxysilanen und Aminoaralkylalkoxysilanen ausgewählt ist, wobei die Alkyl-, Aryl- oder Aralkylgruppen ggf. mit funktionellen Gruppen substituiert sein können;
d) mindestens ein Bedeckungsmittel, das unter den Alkylalkoxysilanen, Arylalkoxysilanen und Aralkylalkoxysilanen ausgewählt ist, wobei die Alkyl-, Aryl- oder Aralkylgruppen mit Ausnahme von aminierten oder schwefelhaltigen Gruppen ggf. mit funktionellen Gruppen substituiert sein können.

2. Zusammensetzung nach Anspruch 1, **dadurch gekennzeichnet, dass** das Dienelastomer mit sauerstoffhaltigen Gruppen ein synthetisches Elastomer ist, dessen Gruppen bei der Synthese des Polymers oder durch eine spätere Behandlung, die an dem Polymer durchgeführt wird, um diese Gruppen einzuführen, in das Polymer eingeführt werden.

3. Zusammensetzung nach einem der Ansprüche 1 oder 2, **dadurch gekennzeichnet, dass** es sich bei dem Dienelastomer mit sauerstoffhaltigen Gruppen um Naturkautschuk handelt.

4. Zusammensetzung nach Anspruch 3, **dadurch gekennzeichnet, dass** der Naturkautschuk 50 bis 100 Gew.-% des sauerstoffhaltigen Elastomers oder der sauerstoffhaltigen Elastomere ausmacht.

5. Zusammensetzung nach einem der Ansprüche 1 bis 3, **dadurch gekennzeichnet, dass** sie ferner ein oder mehrere Dienelastomere enthält, die keine sauerstoffhaltigen Gruppen aufweisen.

6. Zusammensetzung nach Anspruch 5, **dadurch gekennzeichnet, dass** das Gewichtsverhältnis des oder der Dienelastomere mit sauerstoffhaltigen Gruppen und des oder der Dienelastomere ohne sauerstoffhaltige Gruppen über 1 liegt.

7. Zusammensetzung nach einem der Ansprüche 1 bis 6, **dadurch gekennzeichnet, dass** das Material vom Kieselsäuretyp ein Ruß CSDP (Carbon-Silica Dual Phase filler), der an der Oberfläche eine kohlenstoffhaltige Phase und eine Phase aufweist, die aus einer Domäne besteht, an der sich feinverteilte Kieselsäure befindet, und/oder ein Aluminosilicat ist.

8. Zusammensetzung nach einem der Ansprüche 1 bis 7, **dadurch gekennzeichnet, dass** das Material vom Kieselsäuretyp eine Fällungskieselsäure ist.

9. Zusammensetzung nach einem der Ansprüche 1 bis 8, **dadurch gekennzeichnet, dass** das Material oder die Materialien vom Kieselsäuretyp 50 bis 100 % des Gesamtgewichts des Füllstoffs ausmachen.

10. Zusammensetzung nach Anspruch 9, **dadurch gekennzeichnet, dass** der Füllstoff aus 50 bis 100 Gew.-% einer Fällungskieselsäure mit einer spezifischen BET-Oberfläche im Bereich von 100 bis 300 m²/g und vorzugsweise 120 bis 250 m²/g und 50 bis 0 Gew.-% Ruß besteht.

11. Zusammensetzung nach einem der Ansprüche 1 bis 10, **dadurch gekennzeichnet, dass** der Füllstoff 30 bis 70 Gew.-%, bezogen auf das Gesamtgewicht des Elastomers oder der gesamten Elastomere ausmacht.

12. Zusammensetzung nach einem der Ansprüche 1 bis 11, **dadurch gekennzeichnet, dass** das Kupplungsmittel c) der folgenden Formel entspricht:
NH₂-R¹-Si(OR²)₃₋ₙ(R³)ₙ,
worin bedeuten:
- n 0, 1 oder 2;
- R¹ eine Kohlenwasserstoffgruppe mit 1 bis 20 Kohlenstoffatomen;
- OR² eine Alkoxygruppe mit 1 bis 20 Kohlenstoffatomen und vorzugsweise 1 bis 5 Kohlenstoffatomen, wobei R² eine Kohlenwasserstoffgruppe ist und die Gruppen OR², falls mehrere Gruppen vorliegen, identisch oder verschieden sein können;
- R³ eine Kohlenwasserstoffgruppe mit 1 bis 20 und vorzugsweise 1 bis 5 Kohlenstoffatomen, wobei die Gruppen R³, falls zwei Gruppen R³ vorliegen, gleich oder verschieden sein können.

13. Zusammensetzung nach einem der Ansprüche 1 bis 12, **dadurch gekennzeichnet, dass** das Bedeckungsmittel d) der folgenden Formel entspricht:
R⁴-Si(OR⁵)₃₋ₙ(R⁶)ₙ,
worin bedeuten:
- n 0, 1 oder 2;
- R⁴ eine Kohlenwasserstoffgruppe mit 1 bis 20 und vorzugsweise 10 bis 20 Kohlenstoffatomen;
- OR⁵ eine Alkoxygruppe mit 1 bis 20 Kohlenstoffatomen, wobei die Gruppe R⁵ eine Kohlenwasserstoffgruppe ist und wobei die Gruppen OR⁵, falls mehrere vorliegen, identisch oder verschieden sein können;
- R⁶ eine Kohlenwasserstoffgruppe mit 1 bis 20 Kohlenstoffatomen, wobei die Gruppen R⁶, falls zwei vorliegen, identisch oder voneinander verschieden sein können.

14. Zusammensetzung nach einem der Ansprüche 1 bis 13, **dadurch gekennzeichnet, dass** das Verhältnis des Gewichts des Kupplungsmittels c) oder der gesamten Kupplungsmittel c) und des Gewichts des Materials vom Kieselsäuretyp oder der gesamten Materialien vom Kieselsäuretyp im Bereich von 0,01 bis 0,20 und vorzugsweise 0,02 bis 0,10 liegt.

15. Zusammensetzung nach einem der Ansprüche 1 bis 14, **dadurch gekennzeichnet, dass** das Verhältnis des Gewichts des Bedeckungsmittels d) oder der gesamten Bedeckungsmittel d) und des Gewichts des Materials vom Kieselsäuretyp oder der gesamten Materialien vom Kieselsäuretyp im Bereich von 0,01 bis 0,20 und vorzugsweise 0,02 bis 0,10 liegt.

16. Gegenstand, der mindestens eine Zusammensetzung nach einem der Ansprüche 1 bis 15 enthält.

17. Gegenstand nach Anspruch 16, **dadurch gekennzeichnet, dass** es sich um einen Laufstreifen handelt.

18. Gegenstand nach Anspruch 16, **dadurch gekennzeichnet, dass** es sich um einen Luftreifen handelt.

19. Gegenstand nach Anspruch 16, **dadurch gekennzeichnet, dass** es sich um ein elastisches Verbindungsgelenk am Fahrzeugboden handelt.

## Claims

1. A rubber composition, **characterised in that** it comprises:
a) at least one diene elastomer having oxygenated functions;
b) a filler consisting, at least in part, of at least one so-called "silica-type" material, chosen from the group formed by the silicas and the materials other than silicas possessing on the surface oxygenated functions of silicon;
c) at least one coupling agent chosen from the group formed by aminoalkylalkoxysilanes, aminoarylalkoxysilanes and aminoaralkylalkoxysilanes, the alkyl, aryl or aralkyl groups possibly, if applicable, being substituted by functional groups;
d) at least one covering agent chosen from the group formed by alkylalkoxysilanes, arylalkoxysilanes and aralkylalkoxysilanes, the alkyl, aryl or aralkyl groups possibly, if applicable, being substituted by functional groups, with the exception of amino or sulpho groups.

2. A composition according to claim 1, **characterised in that** the diene elastomer with oxygenated functions is a synthetic elastomer, these functions being introduced into the polymer on synthesis of the latter or by a subsequent treatment performed on the polymer in order to introduce those functions.

3. A composition according to any one of claims 1 or 2, **characterised in that** the diene elastomer with oxygenated functions is natural rubber.

4. A composition according to claim 3, **characterised in that** the natural rubber represents 50% to 100% by weight of the oxygenated elastomer or elastomers.

5. A composition according to any one of claims 1 to 3, **characterised in that** it further comprises one or more diene elastomers free of oxygenated functions.

6. A composition according to claim 5, **characterised in that** the ratio by weight of the diene elastomer(s) with oxygenated functions and of the diene elastomer(s) free of oxygenated functions is greater than 1.

7. A composition according to any one of claims 1 to 6, **characterised in that** the silica-type material is a CSDP (Carbon-Silica Dual Phase filler) carbon black having on the surface a carbon phase and a phase containing domains of finely divided silica and/or an aluminosilicate.

8. A composition according to any one of claims 1 to 7, **characterised in that** the silica-type material is precipitated silica.

9. A composition according to any one of claims 1 to 8, **characterised in that** the silica-type material or materials represent(s) 50% to 100% of the total weight of the filler.

10. A composition according to claim 9, **characterised in that** the filler comprises 50% to 100% by weight of a precipitated silica, whose BET specific surface ranges between 100 and 300 m²/g, preferably between 120 and 250 m²/g, and between 50% and 0% by weight of carbon black.

11. A composition according to any one of claims 1 to 10, **characterised in that** the filler represents 30 to 70% by weight in relation to the weight of the elastomer or all the elastomers.

12. A composition according to any one of claims 1 to 11, **characterised in that** the coupling agent c) corresponds to the formula:
NH₂-R¹-Si(OR²)₃₋ₙ(R³)ₙ
in which:
- n is 0, 1 or 2;
- R¹ is a hydrocarbon group comprising 1 to 20 carbon atoms;
- OR² is an alkoxy group comprising from 1 to 20 and preferably 1 to 5 carbon atoms, R² being a hydrocarbon group and the OR² groups, if there are several of them, possibly being identical or different;
- R³ is a hydrocarbon group comprising from 1 to 20 and preferably 1 to 5 carbon atoms, the R³ groups, if there are two of them, possibly being identical or different.

13. A composition according to any one of claims 1 to 12, **characterised in that** the covering agent d) corresponds to the formula:
R⁴-Si(OR⁵)₃₋ₙ(R⁶)ₙ
in which:
- n is 0, 1 or 2;
- R⁴ is a hydrocarbon group comprising from 1 to 20 and preferably 10 to 20 carbon atoms;
- OR⁵ is an alkoxy group comprising from 1 to 20 carbon atoms, the R⁵ group being a hydrocarbon group and the OR⁵ groups, if there are several of them, being identical or different;
- R⁶ is a hydrocarbon group comprising from 1 to 20 carbon atoms, the R⁶ groups, if there are two of them, being identical or different.

14. A composition according to any one of claims 1 to 13, **characterised in that** the ratio between the weight of the coupling agent d) or all of the coupling agents d) and the weight of the silica-type material or all of the silica-type materials ranges between 0.01 and 0.20 and preferably between 0.02 and 0.10.

15. A composition according to any one of claims 1 to 14, **characterised in that** the ratio between the weight of the covering agent d) or all of the covering agents d) and the weight of the silica-type material or all of the silica-type materials ranges between 0.01 and 0.20 and preferably between 0.02 and 0.10.

16. An article containing at least one composition according to any one of claims 1 to 15.

17. An article according to claim 16, **characterised in that** it is a tread.

18. An article according to claim 16, **characterised in that** it is a tyre casing.

19. An article according to claim 16, **characterised in that** it is an elastic bearing for vehicle suspension systems.
